(19) Europäisches Patentamt
European Patent Office
Office européen des brevets

(11) **EP 2 348 204 A1**

(12) **DEMANDE DE BREVET EUROPEEN**

(43) Date de publication:
**27.07.2011 Bulletin 2011/30**

(51) Int Cl.:
**F01N 3/20** *(2006.01)*    **B01D 53/86** *(2006.01)*

(21) Numéro de dépôt: **10195151.5**

(22) Date de dépôt: **15.12.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **22.01.2010 FR 1050421**

(71) Demandeur: **Peugeot Citroën Automobiles SA 78140 Vélizy-Villacoublay (FR)**

(72) Inventeurs:
• **Honnet, Sylvie**
  **78960, Voisins-le-Bretonneux (FR)**
• **Blanchard, Gilbert**
  **60330, Lagny-le-Sec (FR)**
• **Blokkeel, Grégory**
  **92190, Meudon (FR)**
• **Thobois, Ludovic**
  **92160, Antony (FR)**
• **Pajot, Karine**
  **91370, Verrières-le-Buisson (FR)**

(54) **Dispositif d'injection de gaz et ligne d'échappement comprenant un tel dispositif**

(57)    L'invention concerne un dispositif d'injection de gaz comprenant un conduit (5) d'amenée de gaz comportant une partie (7) terminale formant une spirale selon un plan ($P_e$) d'enroulement et comportant une pluralité d'orifices (8) d'injection distribués sur la longueur de la partie (7) terminale et comprenant chacun un axe d'injection (Ai) sensiblement orthogonal au plan ($P_e$) d'enroulement, caractérisé en ce que chacun des orifices (8) d'injection présente une section de passage définie de manière à permettre le passage d'un même débit de gaz à travers les dits orifices (8) d'injection.

L'invention a aussi pour objet une ligne d'échappement comprenant un dispositif de l'invention.

Figure 1

**Description**

**Domaine technique de l'invention**

La présente invention se rapporte à un dispositif d'injection de gaz et concerne plus particulièrement le domaine du traitement des polluants par catalyse à l'aide d'un agent réducteur.

**Arrière-plan technologique**

Depuis de nombreuses années, les constructeurs de véhicules automobiles à moteur thermique font beaucoup d'efforts pour réduire l'émission dans l'atmosphère de composés chimiques nuisibles à l'environnement produits par les moteurs thermiques lors de la combustion du carburant.

Parmi ces composés, on trouve notamment le dioxyde de carbone $CO_2$ ainsi que les oxydes d'azote, principalement le monoxyde NO et le dioxyde $NO_2$ d'azote, désignés ensemble sous l'abréviation $NO_x$. Notons que la production d'oxydes d'azote est plus importante pour les moteurs Diesel que pour les moteurs à essence du fait de leur température de combustion plus élevée.

Pour limiter l'émission des oxydes d'azote dans l'atmosphère, une solution actuellement utilisée consiste à placer sur la ligne d'échappement du véhicule un système de traitement des $NO_x$, appelé système SCR (« Selective Catalytic Reduction »), ayant pour fonction de réduire chimiquement les oxydes d'azote en molécules de di-azote et en vapeur d'eau au moyen d'un agent réducteur. En pratique, l'agent réducteur est injecté dans la ligne d'échappement en amont d'un catalyseur spécifique SCR dans lequel se produit la réaction de réduction.

On distingue deux voies SCR, l'une avec la solution aqueuse d'urée et l'autre avec de l'ammoniac, $NH_3$, gazeux.

La SCR avec urée a été préalablement favorisée pour des raisons d'implantation véhicule. La solution aqueuse d'urée nécessitant un réservoir, le circuit d'alimentation du liquide est relativement simple. Cette voie a par contre l'inconvénient de nécessiter un ensemble de processus physico-chimiques séquentiels longs : l'injection de la solution aqueuse d'urée, l'atomisation du spray d'urée en gouttes puis gouttelettes, l'évaporation et la décomposition chimique de ces gouttelettes en $NH_3$ et enfin le mélange du $NH_3$ avec les gaz d'échappement. Par ailleurs, étant donné l'espace disponible dans la ligne d'échappement pour les phénomènes injection/mélange, la solution SCR avec la solution aqueuse d'urée complique fortement l'homogénéisation de réducteur avec l'oxydant.

L'autre voie explorée est la SCR avec de l'ammoniac, $NH_3$ gazeux. Dans ce cas, le $NH_3$ est injecté sous forme de gaz directement dans les gaz d'échappement où il doit ensuite s'y mélanger.

Il est connu de laisser une distance adéquate entre l'injecteur d'agent réducteur et le catalyseur SCR pour permettre l'obtention d'un mélange homogène le plus achevé possible entre les gaz d'échappement et l'agent réducteur.

Afin d'améliorer l'homogénéité de ce mélange et de raccourcir la distance nécessaire à l'homogénéisation, il est connu d'avoir recours à un mélangeur dit statique, c'est-à-dire sans pièce mobile, positionné à l'intérieur du conduit d'échappement, entre le point d'injection d'agent réducteur dans les gaz d'échappement et l'entrée du catalyseur SCR.

Afin d'améliorer l'homogénéité de ce mélange et de raccourcir la distance nécessaire à l'homogénéisation, il est aussi connu de multiplier les points d'injection de l'agent réducteur en amont du catalyseur SCR.

On connait en particulier du document US2008060352 un dispositif pour la réduction des oxydes d'azote contenus dans des gaz d'échappement produits par un moteur à combustion interne. Le dispositif comprend un injecteur pour injecter un agent réducteur. L'injecteur présente notamment une forme en spirale et comprend une pluralité d'orifices d'injection disposés sur sa longueur. Cependant un tel dispositif n'est pas suffisant pour réellement permettre une diffusion homogène de l'agent réducteur et par conséquent la préparation efficace et l'obtention sur une courte distance axiale d'un mélange homogène entre les gaz d'échappement et l'agent réducteur.

L'invention a pour but de pallier l'inconvénient de l'art antérieur en proposant un nouveau dispositif apte à permettre une diffusion et une répartition homogène de gaz.

L'invention concerne donc un dispositif d'injection de gaz comprenant un conduit d'amenée de gaz comportant une partie terminale formant une spirale selon un plan d'enroulement et comportant une pluralité d'orifices d'injection distribués sur la longueur de la partie terminale et comprenant chacun un axe d'injection sensiblement orthogonal au plan d'enroulement, caractérisé en ce que chacun des orifices d'injection présente une section de passage définie de manière à permettre le passage d'un même débit de gaz à travers les dits orifices d'injection.

De manière simple, la section de passage peut être déterminée par la relation :

$$S_i = \frac{S}{n - i + 1}$$

dans laquelle :

- S est la section intérieure de passage du conduit d'amenée de gaz,
- i est un indice attribué à l'orifice d'injection considéré, i variant de 1 à n dans le sens de l'écoulement du gaz dans le conduit d'amenée et où n est le nombre total d'orifices d'injection.

On équilibre ainsi les débits de gaz entre les différents orifices d'injection, ce qui permet d'avoir un flux de gaz injecté mieux réparti dans le plan d'enroulement de la partie terminale.

Par ailleurs, l'invention peut comporter l'une ou plusieurs des caractéristiques suivantes :

Dans une variante, la partie terminale du conduit d'amenée en forme de spirale est formée par un assemblage de tubes rectilignes.

De préférence, le dispositif de l'invention comprend des tubes d'injection disposés sensiblement orthogonalement au plan d'enroulement au niveau des orifices d'injection et présentant une section intérieure constituant la section de passage desdits orifices.

De préférence encore, les tubes d'injection comprennent une partie saillante à l'intérieur du conduit d'amenée.

De préférence encore, la partie saillante du tube d'injection à l'intérieur du conduit d'amenée présente une forme de demi-tube, de coude ou de biseau, afin de limiter les pertes de charge occasionnées par la partie saillante du tube d'injection.

De préférence, le conduit d'amenée comprend un nombre d'orifice d'injection supérieur à 5.

Par ailleurs, l'invention a aussi pour objet une ligne d'échappement dans laquelle circule des gaz d'échappement produits par un moteur à combustion interne, ladite ligne comprenant un catalyseur de réduction sélective des oxydes d'azote doté d'une face d'entrée sensiblement perpendiculaire au sens d'écoulement des gaz d'échappement, comprenant au moins un dispositif d'injection de gaz de l'invention, disposé, relativement au sens d'écoulement des gaz d'échappement, en amont du catalyseur de réduction sélective, le plan d'enroulement de partie terminale du dispositif étant sensiblement parallèle à la face d'entrée du catalyseur de réduction sélective et les orifices d'injection orientés vers ladite face d'entrée.

De préférence, le dispositif d'injection de gaz injecte de l'ammoniac gazeux, qui est un agent réducteur efficace pour la catalyse par réduction sélective des oxydes d'azotes

De préférence, le dispositif d'injection de gaz est disposé en amont du catalyseur de réduction sélective à une distance comprise entre 10 mm et 60 mm, ce qui permet d'améliore la compacité de l'ensemble.

**Brève description des dessins**

D'autres particularités et avantages apparaîtront à la lecture de la description ci-après d'un mode particulier de réalisation, non limitatif de l'invention, faite en référence aux figures dans lesquelles :

- La figure 1 est une représentation schématique d'une ligne d'échappement comprenant le dispositif d'injection de gaz de l'invention.
- La figure 2 est une vue en coupe selon le plan de coupe A-A référencé en figure 1 d'un premier mode de réalisation du dispositif d'injection de gaz de l'invention.
- La figure 3 est une représentation schématique d'un second mode de réalisation comprenant deux dispositifs d'injection de gaz de l'invention.
- Les figures 4, 5, 6 sont des vues schématiques en coupe de variantes de réalisation avec tube d'injection.
- Les figures 7, 8 et 9 sont des vues schématiques en coupe de variantes de réalisation avec un tube d'injection et une partie saillante interne au conduit d'amenée respectivement en demi-tube, en biseau, en coude.

**Description détaillée**

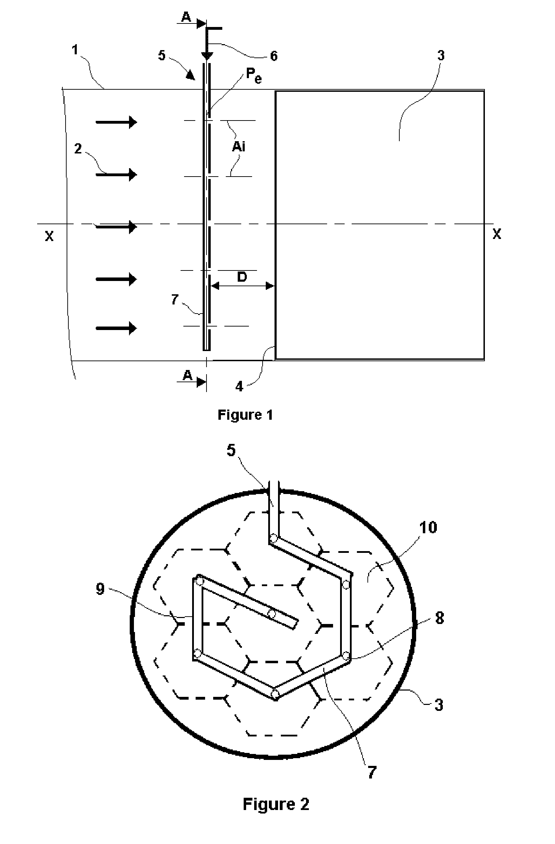

La figure 1 présente une portion de ligne d'échappement de gaz brûlés produits par un moteur à combustion interne. La ligne d'échappement comprend un conduit 1 principal, d'axe central XX, dans lequel circule un flux 2 de gaz brûlés dit flux gazeux principal et raccordé à un catalyseur 3 de réduction sélective (ou SCR), pour la réduction des oxydes d'azote NOx présents dans les gaz d'échappement, par réaction catalytique sélective entre les NOx et un agent réducteur. Par agent réducteur, il convient d'entendre un agent pouvant réagir chimiquement avec des polluants pour les transformer en des produits moins polluants. Le catalyseur 3 est doté d'une face d'entrée 4 sensiblement perpendiculaire au sens d'écoulement des gaz d'échappement.

En amont du catalyseur 3 SCR, relativement au sens d'écoulement des gaz d'échappement, est disposé un dispositif d'injection de gaz comprenant un conduit 5 d'amenée d'un flux 6 d'agent réducteur, en l'occurrence de l'ammoniac gazeux, $NH_3$. Le conduit d'amenée 5 traverse le conduit 1 principal. De préférence, le dispositif d'injection de gaz est disposé en amont du catalyseur 3 de réduction sélective à une distance D comprise entre 10 mm et 60 mm.

La figure 2 présente une vue en coupe selon le plan de coupe A-A référencé en figure 1 passant par l'axe central du conduit d'amenée 5. Le conduit d'amenée 5 comporte une partie terminale 7 ayant la forme générale d'une spirale enroulée plate selon un plan d'enroulement $P_e$ identique au plan de coupe A-A référencé en figure 1. La partie terminale 7 en spirale comporte une pluralité d'orifices 8 d'injection distribués sur longueur de la partie terminale. Les orifices 8 d'injection sont disposés sur la partie terminale 7 de manière à présenter chacun un axe d'injection 1 sensiblement orthogonal au plan d'enroulement $P_e$, tel qu'illustré en figure 1.

Dans le mode de réalisation présenté en figure 2, il est prévu que la partie terminale 7 du conduit 5 d'amenée en forme de spirale soit avantageusement formé par un assemblage de tubes rectilignes. Les tubes 8 rectilignes peuvent être soudés entre eux. Cet ensemble de tubes 8 cylindriques servent de générateur de turbulence pour les gaz d'échappement. Des tubes extérieurement cylindriques permettent de limiter les pertes de charges et de générer une turbulence la plus homogène possible.

L'invention permet d'intensifier le mélange entre les gaz d'échappement et le $NH_3$ gazeux en créant de multiples zones d'injection et de mélange de l'ammoniac gazeux avec les gaz d'échappement. Les zones 10 d'injection et de mélange sont représentées fictivement sur la figure 2 sous forme d'hexaèdres réguliers.

Comme le montre encore la figure 1, le plan d'enroulement $P_e$ de la partie terminale 7 du dispositif est sensiblement parallèle à la face 4 d'entrée du catalyseur 3 de réduction sélective et les orifices 8 d'injection sont orientés vers ladite face 4 d'entrée.

Dans le mode de réalisation présenté en figure 2, l'ensemble des tubes 8 cylindriques de sont disposés afin de joindre les centres de chacun des hexaèdres réguliers pour former un réseau de tubes et permettant de faire un maillage le plus régulier possible de la section de passage des gaz d'échappement.

Concerne la partie terminale 7 du conduit d'amenée 5, il est prévu d'avoir une répartition homogène des orifices 8 d'injection dans le plan d'enroulement $P_e$ afin d'assurer un mélange le plus homogène possible entre les gaz d'échappement et l'ammoniac sous forme gazeuse.

De plus, conformément à l'invention, il est prévu d'adapter la section de chaque orifice 8 d'injection d'ammoniac pour obtenir un débit d'injection d'ammoniac sensiblement identique à travers chacun des orifices 8 d'injection. Les orifices 8 d'injection étant situés dans le présent exemple sensiblement au niveau de coudes, leur diamètre augmente au fur et à mesure de la longueur du parcours entre l'entrée de l'ammoniac jusqu'à l'orifice d'injection considéré.

Soit Q le débit total du flux 6 d'ammoniac et n le nombre total d'orifices d'injection, on veut avoir le même débit Q' à chaque orifice 8 d'injection à savoir Q'=Q/n. Or chaque orifice 8 d'injection crée une intersection où le débit se divise en deux entre la suite du réseau et l'orifice 8 d'injection.

La répartition du débit entre le réseau et le trou dépend de la section intérieure de passage du conduit 5 d'amenée d'ammoniac et de l'orifice 8 d'injection. Ainsi, en attribuant un indice i aux orifices d'injection, i variant de 1 à n dans le sens de l'écoulement du flux 6 d'ammoniac gazeux, avec n le nombre total d'orifices 8 d'injection, en faisant l'hypothèse d'une perte de charge uniforme dans le conduit 5 d'amenée, le débit avant l'orifice d'injection i, noté $Q_{i-1}$, est égal au débit de l'orifice d'injection Q' et au débit après l'orifice d'injection i, noté $Q_i$ , soit

$$Q_i = Q_{i-1} - \frac{Q}{n} \qquad (1)$$

Après développements il vient :

$$Q_i = Q\left(1 - \frac{i-1}{n}\right) \qquad (2)$$

En appliquant le théorème de Bernoulli à chaque intersection, on obtient la relation :

$$S_i = \frac{Q}{nQ_i} S \qquad (3)$$

Avec Si, la section de passage de l'orifice 8 d'injection d'indice i, soit finalement :

$$S_i = \frac{S}{n-i+1} \qquad (4)$$

On peut avantageusement affiner la détermination des sections $S_i$ de passage en prenant en compte de paramètres supplémentaires influençant l'écoulement de gaz dans le conduit 5 d'amenée et en particulier les pertes de charge.

Les gaz d'échappement composés des oxydes d'azote produits par la combustion heurtent les tubes cylindriques du conduit 5 d'amenée, ce qui va générer dans son sillage une turbulence d'environ 5 % de la vitesse d'écoulement des gaz d'échappement. En aval, l'ammoniac gazeux va être injecté par tous les orifices 8 d'injection. L'ammoniac va donc être injecté dans des régions où de la turbulence a été créée, ce qui va permettre d'améliorer l'homogénéisation du mélange gaz d'échappement et ammoniac gazeux. Au niveau global, avec une multitude de points d'injection, l'homogénéisation du mélange sera encore plus efficace.

De préférence, le conduit 5 d'amenée d'ammoniac comprend un nombre d'orifice 8 d'injection supérieur à 5. De préférence encore, le conduit 5 d'amenée d'ammoniac comprend un nombre d'orifice 8 d'injection inférieur à 20.

En outre la distance D peut être ajustée en fonction du dépend du nombre total d'orifices d'injection. En effet, plus le nombre n d'orifice d'injection est élevé, plus la distance D peut être courte. La distance D peut être évaluée à l'aide d'abaques qui donnent une distance de mélange adimensionnée entre deux flux en fonction des débits des deux flux en question. Ainsi pour n=5 il est apparu qu'une distance D de 6 cm est nécessaire pour une homogénéisation parfaite. La distance D diminue sensiblement linéairement avec le nombre n d'orifices 8 d'injection, toutefois au-delà de n=20 il semble plus difficile d'assurer un équilibrage des débits.

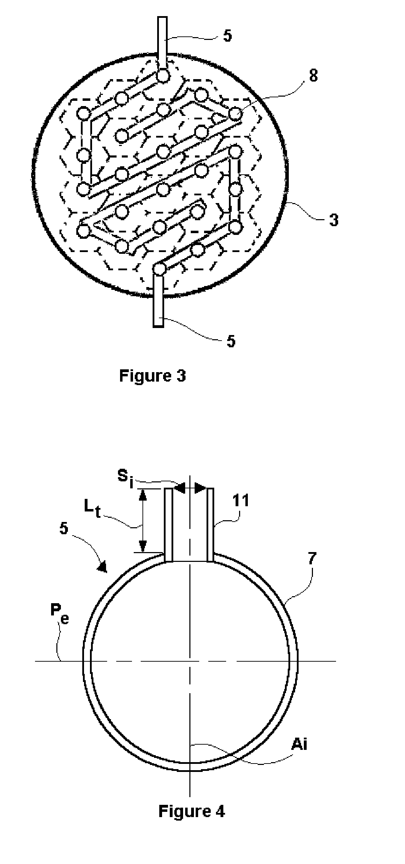

Dans un second mode de réalisation tel que présenté en figure 3, le dispositif d'injection peut comprendre plusieurs conduit 5 d'amenée et chacun des conduits 5 comprend quelques orifices d'injection d'ammoniac.

L'orifice d'injection peut avoir d'autres formes de section qu'un simple cercle, comme une ellipse pour mieux diriger le flux de $NH_3$ dans la largeur.

Dans une variante présentée en coupe sur la figure 4, le dispositif comprend des tubes 11 d'injection disposés sensiblement orthogonalement au plan d'enroulement $P_e$ et présentant une section intérieure constituant la section de passe $S_i$ desdits orifices 8. Le tube 11 d'injection présente une partie extérieure dont la longueur $L_t$ peut être comprise entre 0 mm, autrement dit, il s'agit dans ce cas d'un simple perçage du conduit, jusqu'à 20 mm. L'épaisseur du tube d'injection peut varier de 2 à 5 mm. Sa section de sortie $S_i$ varie en fonction du nombre d'orifice d'injection disposé sur le conduit d'amenée.

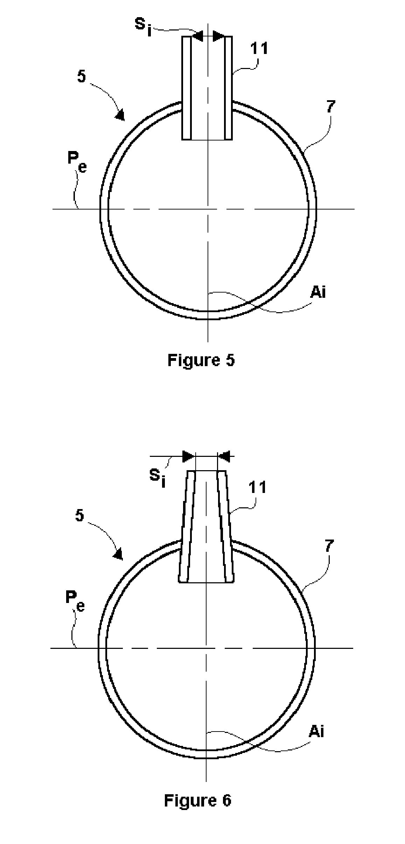

Dans une autre variante présentée en coupe sur la figure 5, les tubes 11 d'injection comprennent avantageusement une partie 12 saillante à l'intérieur du conduit 5 d'amenée. Le tube 11 d'injection peut être saillant jusqu'à un maximum de 1 mm.

Dans une autre variante présentée en coupe sur la figure 6, le tube 11 d'injection peut également être légèrement convergent afin d'accélérer le flux de $NH_3$.

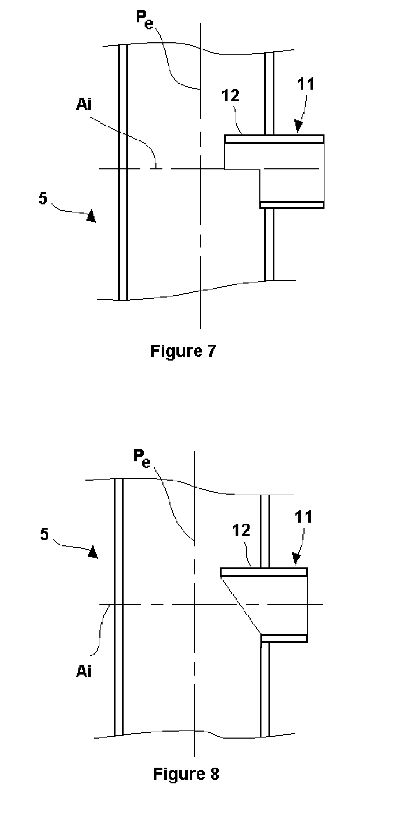

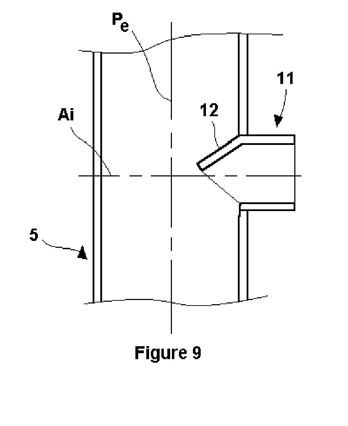

Dans d'autres variante présentés en coupe aux figures 7 à 9, afin d'éviter les pertes de charge dans la partie 7 terminale du conduit 5 d'amenée de $NH_3$, la partie 12 saillante du tube 11 d'injection à l'intérieur du conduit 5 d'amenée peut présenter respectivement une forme de demi-tube, de biseau ou de coude.

Dans le cas où le conduit 5 d'amenée d'ammoniac est un tube cylindrique à l'intérieur, le conduit 5 d'amenée peut voir un diamètre intérieur compris entre 1 et 9 mm et un diamètre extérieur compris entre 2 et 10 mm soit une épaisseur de 0, 5 mm

**Revendications**

1.  Dispositif d'injection de gaz comprenant un conduit (5) d'amenée de gaz comportant une partie (7) terminale formant une spirale selon un plan ($P_e$) d'enroulement et comportant une pluralité d'orifices (8) d'injection distribués sur la longueur de la partie (7) terminale et comprenant chacun un axe d'injection (Ai) sensiblement orthogonal au plan ($P_e$) d'enroulement, **caractérisé en ce que** chacun des orifices (8) d'injection présente une section ($S_i$) de passage définie de manière à permettre le passage d'un même débit (Q') de gaz à travers les dits orifices (8) d'injection.

2.  Dispositif selon la revendication 1, **caractérisé en ce que** la partie (7) terminale du conduit (5) d'amenée en forme de spirale est formée par un assemblage de tubes (9) rectilignes.

3.  Dispositif selon l'une quelconque des revendications précédentes, **caractérisé en ce qu'**il comprend des tubes (11) d'injection disposés sensiblement orthogonalement au plan ($P_e$) d'enroulement au niveau des orifices (8) d'injection et présentant une section intérieure constituant la section (Si) de passage desdits orifices.

4. Dispositif selon la revendication 3, **caractérisé en ce que** les tubes (11) d'injection comprennent une partie (12) saillante à l'intérieur du conduit (5) d'amenée.

5. Dispositif selon la revendication 4, **caractérisé en ce que** la partie (12) saillante du tube (11) d'injection à l'intérieur du conduit (5) d'amenée présente une forme de demi-tube, de coude ou de biseau.

6. Dispositif selon l'une quelconque des revendications précédentes **caractérisé en ce que** le conduit (5) d'amenée comprend un nombre d'orifice d'injection supérieur à 5.

7. Ligne d'échappement dans laquelle circule des gaz d'échappement produits par un moteur à combustion interne, ladite ligne comprenant un catalyseur (3) de réduction sélective des oxydes d'azote doté d'une face (4) d'entrée sensiblement perpendiculaire au sens d'écoulement des gaz d'échappement, **caractérisée en ce qu'**elle comprend au moins un dispositif d'injection de gaz selon l'une quelconque des revendications 1 à 6 disposé, relativement au sens d'écoulement des gaz d'échappement, en amont du catalyseur (3) de réduction sélective, le plan ($P_e$) d'enroulement de partie (7) terminale du dispositif étant sensiblement parallèle à la face (4) d'entrée du catalyseur (3) de réduction sélective et les orifices (8) d'injection orientés vers ladite face (4) d'entrée.

8. Ligne d'échappement selon la revendication 7, caractérisé en ce le dispositif d'injection de gaz injecte de l'ammoniac gazeux.

9. Ligne d'échappement selon la revendication 7 ou la revendication 8, **caractérisé en ce que** le dispositif d'injection de gaz est disposé en amont du catalyseur (3) de réduction sélective à une distance (D) comprise entre 10 mm et 60 mm.

EP 2 348 204 A1

Figure 1

Figure 2

Figure 3

Figure 4

**Figure 7**

**Figure 8**

Figure 5

Figure 6

Pe

Ai

11

12

5

Figure 9

EP 2 348 204 A1

**Europäisches Patentamt**
**European Patent Office**
**Office européen des brevets**

# RAPPORT DE RECHERCHE EUROPEENNE

Numéro de la demande

EP 10 19 5151

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | US 2008/060352 A1 (JOZSA PETER [SE] ET AL) 13 mars 2008 (2008-03-13) * alinéa [0020] - alinéa [0021]; figure 2 * | 1-9 | INV. F01N3/20 B01D53/86 |
| A | EP 1 975 381 A1 (MITSUI SHIPBUILDING ENG [JP]) 1 octobre 2008 (2008-10-01) * alinéa [0033] - alinéa [0042]; figure 2 * <br><br>* alinéa [0049] - alinéa [0053]; figures 5,6 * <br>* alinéa [0099] - alinéa [0105]; figures 12-16 * | 1-9 | |
| A | US 2009/257924 A1 (DISMON HEINRICH [DE] ET AL) 15 octobre 2009 (2009-10-15) * alinéa [0033] - alinéa [0036]; figure 1 * | 1 | |
| A | US 2008/193353 A1 (HIRSCHBERG SEBASTIAN [CH]) 14 août 2008 (2008-08-14) * alinéa [0074] - alinéa [0085]; figures 9,10 * | 1 | DOMAINES TECHNIQUES RECHERCHES (IPC)<br><br>F01N B01D |
| A | US 5 431 894 A (ONISHI TOSHIYUKI [JP] ET AL) 11 juillet 1995 (1995-07-11) * le document en entier * | 1 | |

Le présent rapport a été établi pour toutes les revendications

| Lieu de la recherche | Date d'achèvement de la recherche | Examinateur |
|---|---|---|
| La Haye | 18 mars 2011 | Nobre Correia, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 10 19 5151

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-03-2011

| Document brevet cité au rapport de recherche | Date de publication | Membre(s) de la famille de brevet(s) | | Date de publication |
|---|---|---|---|---|
| US 2008060352 A1 | 13-03-2008 | AT | 406507 T | 15-09-2008 |
| | | BR | PI0419087 A | 26-12-2007 |
| | | CN | 101432506 A | 13-05-2009 |
| | | EP | 1812696 A1 | 01-08-2007 |
| | | JP | 2008519935 T | 12-06-2008 |
| | | WO | 2006052168 A1 | 18-05-2006 |
| EP 1975381 A1 | 01-10-2008 | WO | 2007077919 A1 | 12-07-2007 |
| | | KR | 20080083298 A | 17-09-2008 |
| | | US | 2009004082 A1 | 01-01-2009 |
| US 2009257924 A1 | 15-10-2009 | AT | 453788 T | 15-01-2010 |
| | | CN | 101395350 A | 25-03-2009 |
| | | DE | 102006004170 A1 | 02-08-2007 |
| | | EP | 1977090 A1 | 08-10-2008 |
| | | WO | 2007085646 A1 | 02-08-2007 |
| | | ES | 2344480 T3 | 27-08-2010 |
| | | JP | 2009524765 T | 02-07-2009 |
| US 2008193353 A1 | 14-08-2008 | AT | 476590 T | 15-08-2010 |
| | | CN | 101306307 A | 19-11-2008 |
| | | EP | 1956206 A2 | 13-08-2008 |
| | | JP | 2008196479 A | 28-08-2008 |
| | | KR | 20080074741 A | 13-08-2008 |
| US 5431894 A | 11-07-1995 | JP | 6114236 A | 26-04-1994 |

EPO FORM P0460

Pour tout renseignement concernant cette annexe : voir Journal Officiel de l'Office européen des brevets, No.12/82

**EP 2 348 204 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008060352 A